# EUROPEAN PATENT SPECIFICATION

(11) **EP 1 619 782 B1**
(45) Date of publication and mention of the grant of the patent: **16.08.2017**
(21) Application number: 05004079.9
(22) Date of filing: 24.02.2005
(51) Int. Cl.: H02M 1/38

(54) **Power converter with short circuit protection**
Leistungs-Umrichter mit Kurzschluss-Schutz
Convertisseur de puissance avec protection contre les courts-circuits

(30) Priority: 22.07.2004 JP 2004213727
(43) Date of publication of application: 25.01.2006
(73) Proprietor: Hitachi, Ltd., Chiyoda-ku Tokyo 100-8280 (JP)
(72) Inventor: Kohno, Yasuhiko, Tokyo 100-8220 (JP); Toyota, Eiichi, Hitachinaka-shi, Ibaraki 312-0034, (JP); Nohara, Mikiya, Tokyo 100-8220 (JP); Konishide, Masaomi, Tokyo 100-8220 (JP); Nagasu, Masahiro, Tokyo 100-8220 (JP)
(74) Representative: Strehl Schübel-Hopf & Partner

(56) References cited:
- EP-A- 0 284 021
- WO-A-87/05163
- DE-A1- 4 032 014
- US-A1- 2004 041 619
- US-B1- 6 262 896

## Description

### FIELD OF THE INVENTION

This invention relates to a power converter system which alternately converts direct currents to alternate currents and vice versa. Particularly, this invention relates to a technology to protect a power converter system.

### BACKGROUND OF THE INVENTION

One of the most important power conversion technologies is an inverter that converts direct currents into alternating currents. Particularly, the IGBT inverters using IGBTs (short for insulated gate bipolar transistors) as power semiconductor switching devices have been widely used in various fields from home electric appliances to railway vehicles.

One of typical IGBT inverter troubles is an arm short circuit. When some IGBTs turn on at the same time by a controller malfunction or the like, d.c. voltage lines are short-circuited. This is an arm short circuit. An arm short circuit, if occurs, causes an excessive current to flow through and break the IGBTs. Consequently, the inverter is forced to stop its operation.

Japanese Patent No. 3336488 discloses an art to prevent such an arm short circuit. FIG. 2 shows an arm short circuit preventing circuit which is disclosed by Japanese Patent No. 3336488. The circuit of FIG. 2 contains a gate pulse generating circuit 200, an upper arm gate drive circuit 201, a lower arm gate drive circuit 202, an upper arm IGBT 203, a lower arm IGBT 204, AND circuits 207 and 208, reverse input AND circuits 205 and 206, upper arm gate pulses 209, lower arm gate pulses 210, upper arm gate voltage 211, lower arm gate voltage 212, upper arm interlock signal 213, lower arm interlock signal 214, upper arm feedback signal 215, and lower arm feedback signal 216.

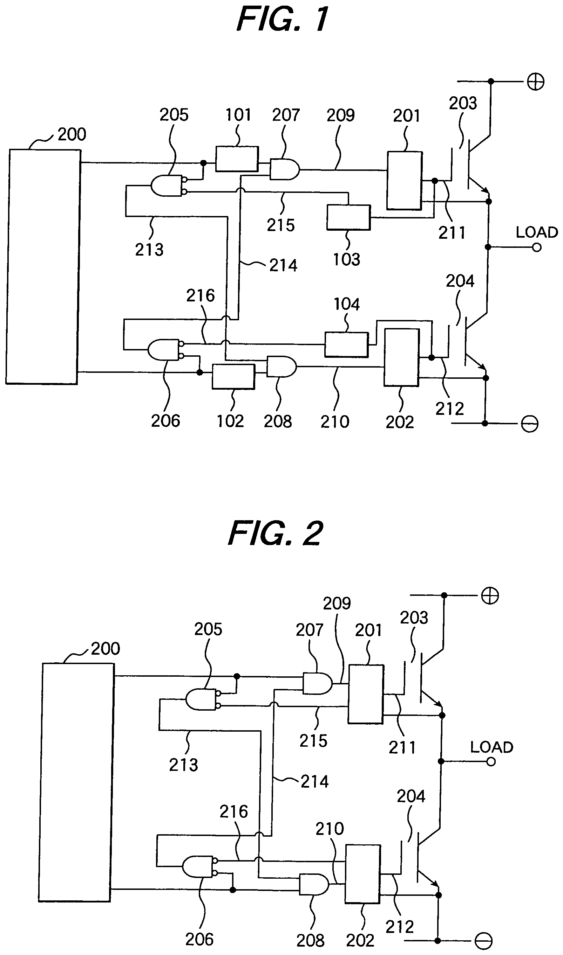

This circuit of FIG. 2 executes AND operation between the OFF state of the other one in the IGBTs in pairs and the ON gate pulse to the IGBT by the AND circuits 207 and 208 and drives the IGBTs by the result. This can prevent simultaneous on-turning of IGBTs.

Documents US 2004/0041619 A1 and DE 40 32 014 A1 disclose further power converter systems that are designed in a way to prevent arm short circuits.

### SUMMARY OF THE INVENTION

Japanese Patent No. 3336488 has a problem that both upper and lower IGBTs turn on when both upper and lower arms receive ON signals at the same time. This will be explained below in detail in reference to FIG. 2. Let's assume that both upper and lower arms are initially OFF. In this status, the inputs from the gate pulse generating circuit 200 are Low (OFF) and IGBT gate voltages 211 and 212 are also Low (OFF). The inputs of the AND circuits 205 and 206 that generate interlock signals are both "1" and their outputs (205 and 206) are High (Enable). Therefore, one of the inputs of the AND circuits 207 and 208 is High (Enable). The arm is ready to turn on the IGBT immediately when an ON signal is applied from the gate pulse generating circuit 200. If ON signals are applied to both upper and lower arms at the same time from the gate pulse generating circuit 200, both IGBTs turn on and an arm short circuit occur.

An object of this invention is to provide a high reliability power converter system that suppresses arm short circuit without fail.

The power converter system of this invention is defined in claim 1. Preferred embodiments are defined in the dependent claims. This invention can provide a trouble-free high-reliability power converter system that can prevent arm short circuit without fail even when ON signals are input at the same time. Even when applied to a 3-level inverter, this power converter system with a minimum circuit configuration can prevent arm short circuit without fail. Therefore, this invention can provide a high reliability inverter system.

Further objects, features and advantages of this invention will be apparent from the following detailed description of preferred embodiments when taken in conjunction with the accompanying drawings.

### BRIEF DESCRIPTION OF DRAWINGS

FIG. 1 is a schematic diagram to explain the power converter system which is the first embodiment of the invention.
FIG. 2 is a schematic diagram to explain a power converter system of the conventional art.
FIG. 3 shows operating waveforms to explain operations of power converter systems of Embodiments 1 and 2.
FIG. 4 is a schematic diagram to explain the power converter system which is the second embodiment of the invention.
FIG. 5 is a schematic diagram to explain the power converter system which is the third embodiment of the invention.
FIG. 6 is a schematic diagram to explain the power converter system which is the fourth embodiment of the invention.
FIG. 7 is a schematic diagram to explain the a.c. railway vehicle power converter system which is the fifth embodiment of the invention.

### DESCRIPTION OF THE PREFERRED EMBODIMENTS

### [EMBODIMENT 1]

FIG. 1 shows a schematic diagram of a power converter system which is the first embodiment of this invention. The power converter system contains delay circuits 101 and 102 and judging circuits 103 and 104. This embodiment is characterized by provision of delay circuits each of which starts the ON gate pulse to the IGBT at a predetermined interval after an interlock signal to the other one in the IGBTs in pairs is applied. This delay circuit delays transmission of a signal by a predetermined time period.

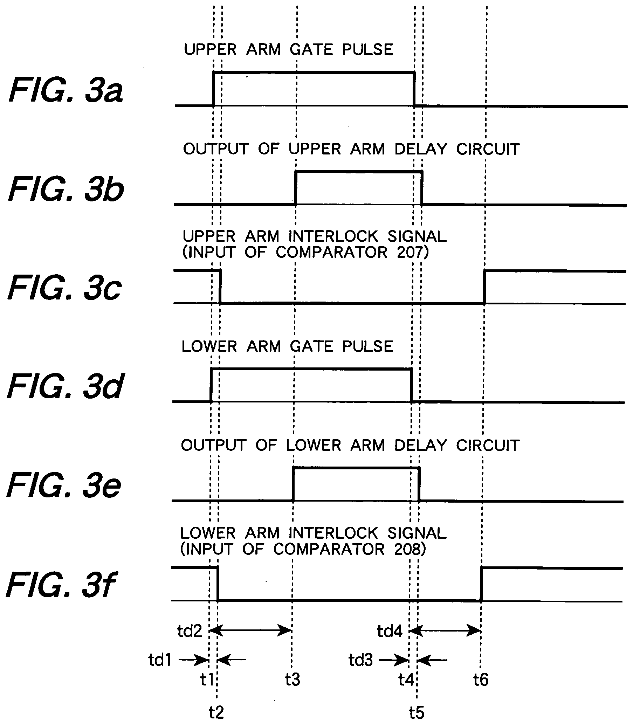

FIG. 3 shows operational waveforms when ON signals are simultaneously applied to the circuit of FIG. 1. At a time instant t1 in FIG. 3, gate pulses for the upper and lower arms go High (ON). At a time instant t2, interlock signals for the upper and lower arms go High (Enable) to Low (Disable). The time interval between t1 and t2 is called a time delay td1. This time delay td1 comes from a delay in the AND circuit or a propagation delay between the AND circuit and the arm pair.

At a time instant t3, the output of the delay circuit turns Low (OFF) to High (ON) and the ON signal is sent from the gate pulse generating circuit 200 to the AND circuit 207. The time interval between t1 and t3 is called a time delay td2. This time delay td2 comes from a delay made by the delay circuit 101 and can be changed freely by setting for the delay circuit 101. When "td2 > td1" is set as shown in FIG. 3, the interlock signal 214 from the arm pair goes Low (Disable) before the ON signal is sent to the AND circuit 207. This prevents an arm short circuit even when ON signals are applied to both upper and lower arms.

The td2 value must be fully greater than the td1 value. Specifically, the td2 value should preferably be 2 microseconds or greater because the td1 value is 500 nanoseconds to 2 microseconds due to a sum of a delay by an operational amplifier and a propagation delay. Therefore, the td2 value should be 2 microseconds or greater and more preferably 3 microseconds or greater.

Further, the time delay td3 is a time interval between the instant at which a gate pulse turns High (ON) to Low (OFF) and the instant at which the output of the delay circuit turns High (ON) to Low (OFF). This time delay td3 should preferably be as short as possible because IGBTs must be shut off immediately when an OFF gate pulse is sent from the signal generating section in the case the signal generating section detects an error by the other error detecting sensor (not shown in the figure) and the inverter must stop the operation. Therefore, the delay in the delay circuit in off-turning should preferably be as little as possible.

Further, this embodiment also provides an art to prevent arm short circuit due to a malfunction of the gate drive circuit. For example, if the gate drive circuit 201 malfunctions and the IGBT 203 turns ON when the IGBT 204 is ON, the output signal of the judging circuit 103 that monitors the gate voltage goes Low (OFF) to High (ON) to make the interlock signal 213 go Low (Disable). This stops on-turning of the IGBT 204 and prevents the arm short circuit. This judging circuit can monitor the collector voltage or collector current while monitoring the gate voltage.

Although this embodiment describes a configuration that places a circuit of this invention between a gate pulse generating circuit and a gate drive circuit, there can be some other configurations of placing the circuit. For example, a delay circuit 101, a gate pulse generator 200, and AND circuits 205 and 207 are assembled on a single circuit board. This configuration can shorten interlock and feedback lines which connect different arms and consequently downsize the circuit.

Another configuration can have a delay circuit 101, a judging circuit 103, a drive circuit 201, and AND circuits 205 and 207 on a single circuit board. This configuration can place an arm short circuit preventing circuit and a drive circuit very near an IGBT and prevent the IGBT from malfunctioning by noises when the inverter is operated by a high voltage power supply. For example, if the above circuit is connected to a remote IGBT with long wires, these wires work as antenna to catch noises. The noises may cause the IGBT to malfunction. In other words, when the circuit is placed very near the IGBT, the inverter can be less-affected by noises and higher in reliability.

Another preferable configuration connects a gate pulse generator 200 and the above circuit board with optical fibers. When the circuit like an inverter for a railway vehicle is connected to a high voltage power supply for use, the upper arm drive circuit has a high voltage floated and consequently generates a great potential difference between the drive circuit and the gate pulse generator. The circuit must be insulated from this potential difference. Therefore, a preferable configuration should use optical fibers for electric insulation and transmission of signals only.

### [EMBODIMENT 2]

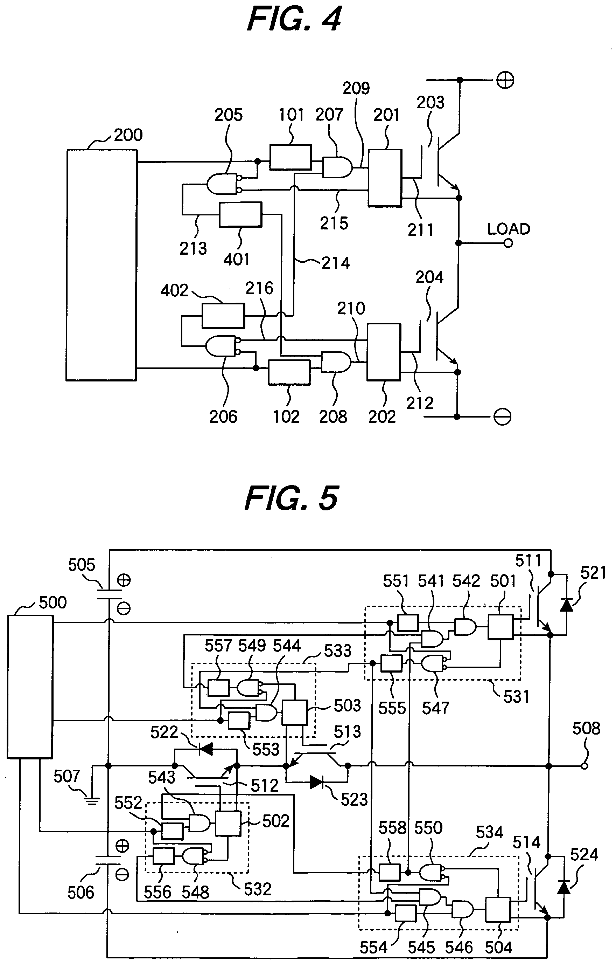

FIG. 4 shows a schematic diagram of a power converter system which is the second embodiment of this invention. The circuit of FIG. 4 contains delay circuits 401 and 402. This embodiment is characterized by provision of delay circuits 401 and 402 each of which delays interlock signals. This embodiment will be explained in detail referring to FIG. 3.

At a time instant t1 in FIG. 3, gate pulses go Low (OFF) to High (ON). At a time instant t2, interlock signals go High (Enable) to Low (Disable). The time delay td1 between t1 and t2 must be as short as possible from the above reason (see Embodiment 1). Therefore, the delay circuits 401 and 402 must be so constructed to minimize signal delays such as AND circuit delays and propagation delays when interlock signals go High (Enable) to Low (Disable),

At a time instant t4, gate pulses go High (ON) to Low (OFF). At a time instant t5, interlock signals go Low (Disable) to High (Enable). The time delay td4 between t4 and t5 must be fully greater than the time delay td3. This is because, if td4 is smaller than td3, the interlock signal may go High (Enable) while the output of the delay circuit is High (ON) and this may cause an arm short circuit.

Therefore, the time delay td3 must be smaller than the time delay td4. For this purpose, the delay circuits 401 and 402 must be so constructed to generate delays that satisfy the condition "td3 < td4" when interlock signals go Low (Disable) to High (Enable). In other words, these delay circuits are so constructed to make the time delay td4 (when interlock signals go Low (Disable) to High (Enable)) longer than the time delay td1 (when interlock signals go High (Enable) to Low (Disable)). A specific circuit configuration is a series circuit (CR circuit) consisting of capacitors and resistors which are so connected to provide different charging and discharging resistances.

### [EMBODIMENT 3]

FIG. 5 shows a schematic diagram of a power converter system which is the third embodiment of this invention. This embodiment is characterized in that an arm short circuit preventing circuit of this invention is applied to a neutral point clamped 3-level IGBT inverter in which the neutral point and the a.c. output are connected with switching devices. The circuit of FIG. 5 contains a gate pulse generator 500, IGBT drive circuits 501 to 504, power capacitors 505 and 506, a neutral point 507, an a.c. output 508, IGBTs 511 to 514, free-wheeling diodes 521 to 524, IGBT drive circuit boards 531 to 534, AND circuits 541 to 550, and delay circuits 551 to 558.

The circuit of FIG. 5 is so constructed to output a positive voltage to the a.c. output 508 when IGBTs 511 and 512 are ON and IGBTs 513 and 514 are OFF, a neutral potential to the a.c. output 508 when IGBTs 512 and 513 are ON and IGBTs 511 and 514 are OFF, and a negative voltage to the a.c. output 508 when IGBTs 513 and 514 are ON and IGBTs 511 and 512 are OFF.

This circuit has two arm short circuit modes: Mode A and Mode B. Mode A short-circuits the positive terminal of the power capacitor 505 and the negative terminal of the power capacitor 506 when IGBTs 511 and 514 turn on at the same time. Mode B short-circuits both ends of the power capacitor 505 when IGBTs 511 and 513 turn on at the same time. As IGBTs 512 and 514 work similarly to IGBTs 511 and 513, Mode B can be applied to IGBTs 512 and 514 and its explanation is omitted here.

To prevent the arm short circuit, this embodiment builds up the circuit as explained below. The IGBT 511 is driven by an ON signal from the gate pulse generator 500. The ON signal to the drive circuit 501 is produced by a logical product (AND) of the output of the AND circuit 541 and a signal which is output from the gate pulse generator 500 and delayed by the delay circuit 551. The AND circuit 541 is so constructed to AND an interlock signal from the drive circuit board 533 for the IGBT 513 and an interlock signal from the drive circuit board 534 for the IGBT 514. When both IGBTs 513 and 514 go off at the same time, the interlock signals from the IGBTs 513 and 514 go High and the output of the AND circuit 541 goes High (Enable). As the result, the AND circuit 542 can drive the drive circuit 501 by a signal sent from the gate pulse generator 500.

Similarly, the IGBT 514 is also designed to turn ON when both IGBTs 511 and 512 go OFF. This can prevent arm short circuit of Mode A and Mode B by IGBTs 511 and 514. Contrarily, the IGBT 512 is designed to turn ON when the IGBT 511 goes OFF. This can prevent arm short circuit of Mode B by IGBT 511. Similarly, the IGBT 513 is designed to turn ON only when the IGBT 511 goes OFF. This can prevent arm short circuit of Mode B by IGBT 513.

This embodiment like Embodiment 1 delays gate pulses by delay circuits 551 to 554 to prevent arm short circuit which occurs when ON signals are applied to arms at the same time. Further, this embodiment like Embodiment 2 provides delay circuits 555 to 558 also for interlock signals. These delay circuits delays interlock signals between the instant at which the gate pulse turns OFF and the instant at which the arm pair is enabled. With this, the arm short circuit is prevented.

This embodiment also shows a configuration that has both an IGBT drive circuit and an arm short circuit preventing circuit together on a single drive circuit board. For example, the drive circuit 501 of the IGBT 511, AND circuits 541, 542, and 547, and a delay circuit 551 and 555 are assembled on a single circuit board 531. The circuit board 531 is electrically insulated from the gate pulse generator 500 and the IGBT drive circuit boards 533 and 534. This is because the potentials of the IGBT drive circuit boards and IGBTs change while the inverter operates and there may be potential differences among the IGBT drive circuit boards. For this electric insulation, transformers or light transmission elements can be used. For example, the use of optical fibers as means for transmission among the IGBT drive circuits can assure steady signal transmission even when the IGBT drive circuits have different potentials. Consequently, the reliability of the inverter increases.

Although this embodiment provides an interlock signal delay circuit on a circuit board that generates interlock signals, the interlock signal delay circuit can be provided on a circuit board that receives interlock signals. For example, although the delay circuit 555 is built on the IGBT drive circuit board 531, the delay circuits can be built respectively on the IGBT drive circuit boards 533 and 534.

### [EMBODIMENT 4]

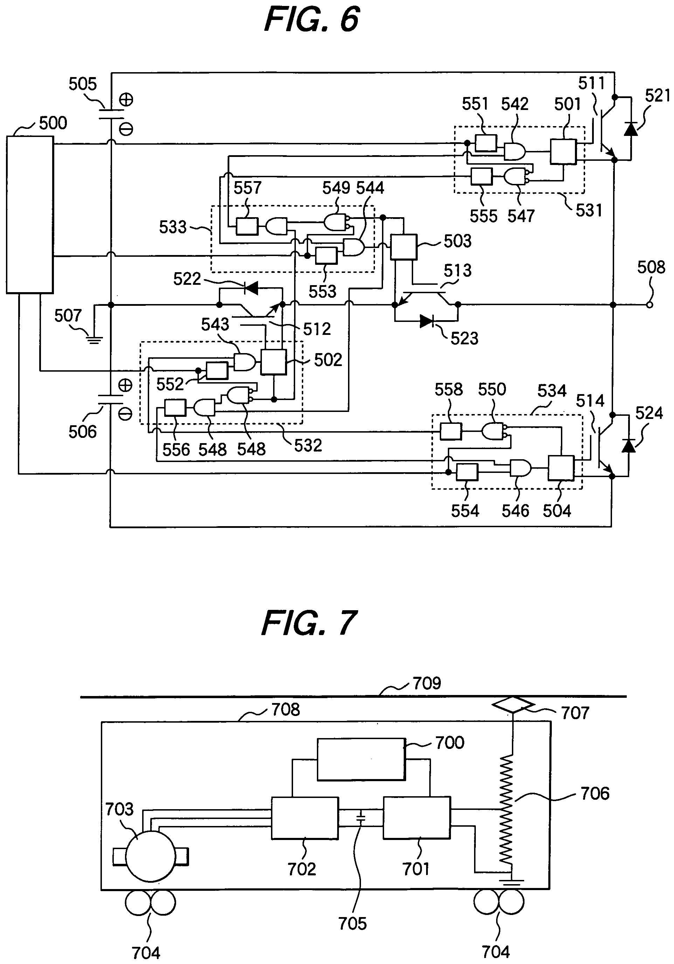

FIG. 6 shows a schematic diagram of a power converter system which is the fourth embodiment of this invention. This embodiment is characterized in that the IGBT 511 communicates with the IGBT 514 through the IGBT drive circuit boards 502 and 503. This configuration requires only four high-insulated transmission lines. This is because the IGBTs 512 and 513 are emitter-to-emitter connected and the potential difference between the IGBT drive circuit boards is so small that no insulation like optical fibers may be required. Therefore, the connection between the IGBT drive circuit boards 511 and 514 can be a non-insulated connection. Accordingly, only four high-insulated transmission lines are used when the IGBT 511 communicates with the IGBT 514 through the IGBT drive circuit boards 502 and 503.

Another preferred configuration uses a low-voltage insulation such as a photocoupler for connection between IGBT drive circuits 502 and 503. As the IGBTs 512 and 513 are emitter-to-emitter connected, there usually is little potential difference between the IGBT drive circuit boards. In some cases, however, a comparatively low potential difference temporarily occurs in switching. This potential difference may cause an unwanted current between the IGBT drive circuits 532 and 533 and cause the circuits to malfunction. To prevent this, a preferred configuration may use a photocoupler for electric insulation between the IGBT drive circuits 532 and 533. Photocouplers are less expensive than the above-described optical fibers and transformers and enable realization of inexpensive arm short circuit preventing functions.

### [EMBODIMENT 5]

FIG. 7 shows a schematic diagram of the fifth embodiment of this invention. This circuit configuration consists of a signal generator 700, a converter 701, an inverter 702, a motor 703, wheels 704, a capacitor 705, a transformer 706, a pantograph 707, a car body 708, and a trolley wire 709. The configuration of FIG. 7 is for an a.c. railway vehicle. This system collects alternate current from the trolley wire 709 to the transformer 706 via the pantograph 707, steps down the voltage by the transformer 706, and sends the resulting voltage to the converter 701. The converter 701 converts the incoming power into direct current and outputs the result to the inverter 702. The inverter 702 converts the incoming direct current into alternating current of an arbitrary frequency. The motor 703 is driven by this alternating current of an arbitrary frequency.

This embodiment is characterized in that the converter and the inverter on the railway vehicle respectively contain the arm short circuit functions that are described in Embodiments 1 to 4. When used for a long time under severe conditions such as in railway systems, parts may be deteriorated quickly and cause malfunctions. To prevent this, railway vehicles are periodically inspected. If this inspection interval is short, their operating rates may go down. This will be a great restriction in railroad scheduling and vehicle arrangement. If the inverter or converter of a railroad vehicle malfunctions or gets disabled, the running ability of the vehicle may go down and in an extreme case, the vehicle may stop. This embodiment having a power converter system that can prevent arm short circuit can increase the inspection interval of the vehicle and consequently improve its operating rate. Further, as this embodiment is free from troubles due to arm short circuit, this embodiment can raise the reliability of the railway system.

Although we described above the embodiments that apply this invention to a 2-level IGBT inverter and a neutral point clamped 3-level IGBT inverter, it will become clear to those skilled in the art that this invention is similarly applicable to a converter which is d.c. to a.c. power converting equipment.

The similar arm short circuit preventing effect can be obtained also by applying this invention to any of multi-level inverters such as 3-, 5-, and 7-level inverters. Further, the similar effect can be obtained by using, as the switching devices, power MOSFET, bipolar transistors, thyristors, and GTOs besides IGBTs.

## Claims

1. A power converter system comprising
a plurality of d.c. voltage terminals,
a.c. voltage terminals,
switching devices (203, 204; 511-514) for connecting said d.c. and a.c. voltage terminals,
rectifier devices which are reverse-parallel connected to said switching devices (203, 204; 511-514),
a signal generator (200; 500) for generating signals to drive the switching devices (203, 204; 511-514),
drive circuits (201, 202; 501-504) to drive said switching devices (203, 204; 511-514) in response to driving signals from said signal generator (200; 500), and
a transmission circuit (205-208; 541-549) for interconnecting said drive circuits (201, 202; 501-504) to transmit their operating status, wherein
each of the drive circuits (201, 202; 501-504) connected together by said transmission circuit (205-208; 541-549) has a control circuit (101, 102; 551-554) which inhibits the operation of one of the drive circuits (201, 202; 501-504) when the other drive circuit (202, 201) receives an ON signal,
**characterised in that**
a delay time (td1) between the instant at which an ON signal is applied to one of the drive circuits (201, 202; 501-504) and the instant at which the operation of the other drive circuit (202, 201; 501-504) is disabled is shorter than a delay time (td2) between the instant at which an ON signal is applied to the other drive circuit (202, 201; 501-504) and the instant at which the switching device (204, 203; 511-514) connected to the other drive circuit (202, 201; 501-504) starts.

2. The power converter system of claim 1, wherein the delay time (td1) between the instant at which an ON signal is applied to one of the drive circuits (201, 202; 501-504) and the instant at which the operation of the other drive circuit (202, 201; 501-504) is disabled is shorter than a delay time (td4) between the instant at which an OFF signal is applied to one of the drive circuits (201, 202; 501-504) and the instant at which the other drive circuit (202, 201; 501-504) is enabled.

3. The power converter system of claim 1, wherein a delay time (td4) between the instant at which an OFF signal is applied to one of the drive circuits (201, 202; 501-504) and the instant at which the other drive circuit (202, 201; 501-504) is enabled is greater than a delay time (td3) between the instant at which an OFF signal is applied to one of the drive circuits (201, 202; 501-504) and the instant at which the switching device (203, 204; 511-514) connected to the one of the drive circuits (201, 202; 501-504) turns OFF.

4. The power converter system of any preceding claim, wherein
each of the drive circuits (201, 202; 501-504) connected together by said transmission circuit (205-208; 541-549) further comprises a judging circuit (103, 104) that detects the operating status of said switching devices (203, 204; 511-514) and judges the ON/OFF status thereof, and
said control circuit (101, 102; 551-554) inhibits one of the switching devices (203, 204; 511-514) from turning ON when the judging circuit (103, 104) detects the ON status of the other switching device (204, 203; 511-514).

5. The power converter system of any preceding claim, wherein the delay time (td2) between the instant at which an ON signal is applied to the other drive circuit (202, 201; 501-504) and the instant at which the switching device (204, 203; 511-514) connected to the other drive circuit (202, 201; 501-504) starts is 2 microseconds or greater.

6. The power converter system of claim 1, comprising
first and second d.c. voltage sources (505, 506) that are connected in series,
among said voltage terminals, two terminals at both ends of the connected voltage sources and one intermediate terminal at the joint of the voltage sources,
at least four switching circuits per phase each of which consisting of a switching device of said switching devices (511-514) and a rectifier device of said rectifier devices which is reverse-parallel connected to the switching device (511-514),
first and second series-connected switching circuits (511, 521; 514, 524) among them, a first circuit which connects said first and second switching circuits to both end terminals of the series-connected d.c. power sources (505, 506) and uses the joint of the first and second switching devices (511, 514) as one of the a.c. voltage terminals which constitutes an a.c. output terminal (508),
third and fourth reverse-series connected switching circuits (512, 522; 513, 523),
a second circuit which connects said third and fourth switching circuits to the intermediate terminal of the power sources and said a.c. output terminal (508),
wherein each of the drive circuits (501-504) in pairs that are connected by said transmission circuit (541-550) is equipped with a control circuit (551-554) which inhibits one of the switching devices (511-514) from turning on when a judging circuit (103, 104) detects the ON status of the other switching device (511-514).

7. The power converter system of claim 1, comprising
first and second d.c. voltage sources that are connected in series,
among said voltage terminals, two terminals at both ends of the connected first and second d.c. voltage sources and one intermediate terminal at the joint of the voltage sources,
at least four switching circuits per phase each of which consisting of a switching device of said switching devices (511-514) and a rectifier device of said rectifier devices which is reverse-parallel connected to the switching device,
first and second series-connected switching circuits among them, a first circuit which connects said first and second switching circuits to both end terminals of the series-connected first and second d.c. voltage sources and uses the joint of the first and second switching devices (511, 514) as the a.c. output terminal (508),
third and fourth reverse-series connected switching circuits,
a second switching circuit which connects said third and fourth switching circuits to the intermediate terminal of the first and second voltage sources and said a.c. output terminal (508),
first transmission lines (544, 547) of said transmission circuit (541-549) for connecting, among said drive circuits (501-504), a first drive circuit (501) in said first switching circuit to the third switching device (513),
second transmission lines (545, 546, 548) of said transmission circuit (541-549) for connecting, among said drive circuits (501-504), a second drive circuit (502) in said second switching circuit to the switching device (514) in said fourth switching circuit, and
third transmission lines of said transmission circuit (541-549) for connecting the second drive circuit (502) to the switching device (513) in said third switching circuit,
wherein
said first drive circuit (501) contains a control circuit (551) which inhibits the operation when an ON signal is input to third and fourth drive circuits (503, 504) among said drive circuits (501-504),
said fourth drive circuit (504) contains a control circuit (554) which inhibits the operation when an ON signal is input to the first and second drive circuits (501, 502),
the delay time (td1) between the instant at which an ON signal is applied to the third drive circuit (503) and the instant at which the first drive circuit (501) is disabled to operate is shorter than the delay time (td2) between the instant at which an ON signal is applied to the first drive circuit (501) and the instant at which the switching device (511) connected to the first drive circuit (501) starts, and
the delay time (td1) between the instant at which an ON signal is applied to the second drive circuit (502) and the instant at which the fourth drive circuit (504) is disabled to operate is shorter than the delay time (td2) between the instant at which an ON signal is applied to the fourth drive circuit (504) and the instant at which the switching device (514) connected to the fourth drive circuit (504) starts.

8. The system of claim 1 or 3, wherein said signal generator (200; 500) and said drive circuits (201, 202; 501-504) are interconnected with optical fibers to optically transfer drive signals.

9. A vehicle system comprising
a power supply,
a motor (703),
the power converter system of claim 1 that receives power from the power supply and converts thereof to drive the motor (703), and
a control section to control said power converter system.

## Patentansprüche

1. Leistungsumrichtersystem mit
mehreren Gleichspannungsanschlüssen, Wechselspannungsanschlüssen,
Umschaltvorrichtungen (203, 204; 511-514) zum Verbinden der Gleichspannungs- und Wechselspannungsanschlüsse,
Gleichrichtervorrichtungen, die umgekehrt parallel an die Umschaltvorrichtungen (203, 204; 511-514) angeschlossen sind,
einem Signalgenerator (200; 500) zum Erzeugen von Signalen, um die Umschaltvorrichtungen (203, 204; 511-514) zu betreiben,
Antriebsschaltungen (201, 202; 501-504), um die Umschaltvorrichtungen (203, 204; 511-514) gemäß Antriebssignalen aus dem Signalgenerator (200; 500) zu betreiben, und
einer Sendeschaltung (205-208; 541-549) zum Verbinden der Antriebsschaltungen (201, 202; 501-504), um deren Betriebsstatus zu senden,
wobei jede der Antriebsschaltungen (201, 202; 501-504), die miteinander durch die Sendeschaltung (205-208; 541-549) verbunden sind, eine Steuerschaltung (101, 102; 551-554) aufweist, die den Betrieb von einer der Antriebsschaltungen (201, 202; 501-504) unterbricht, wenn die andere Antriebsschaltung (202, 201) ein ON-Signal empfängt,
**dadurch gekennzeichnet, dass** eine Verzögerungszeit (td1) zwischen dem Moment, in dem ein ON-Signal an eine der Antriebsschaltungen (201, 202; 501-504) angelegt wird, und dem Moment, in dem der Betrieb der anderen Antriebsschaltung (202, 201; 501-504) deaktiviert wird, kürzer ist als eine Verzögerungszeit (td2) zwischen dem Moment, in dem ein ON-Signal an die andere Antriebsschaltung (202, 201; 501-504) angelegt wird, und dem Moment, in dem die an die andere Antriebsschaltung (202, 201; 501-504) angeschlossene Umschaltvorrichtung (204, 203; 511-514) startet.

2. Leistungsumrichtersystem nach Anspruch 1, wobei die Verzögerungszeit (td1) zwischen dem Moment, in dem ein ON-Signal an eine der Antriebsschaltungen (201, 202; 501-504) angelegt wird, und dem Moment, in dem der Betrieb der anderen Antriebsschaltung (202, 201; 501-504) deaktiviert wird, kürzer ist als die Verzögerungszeit (td4) zwischen dem Moment, in dem ein OFF-Signal an eine der Antriebsschaltungen (201, 202; 501-504) angelegt wird, und dem Moment, in dem die andere Antriebsschaltung (202, 201; 501-504) aktiviert wird.

3. Leistungsumrichtersystem nach Anspruch 1, wobei eine Verzögerungszeit (td4) zwischen dem Moment, in dem ein OFF-Signal an eine der Antriebsschaltungen (201, 202; 501-504) angelegt wird, und dem Moment, in dem die andere Antriebsschaltung (202, 201; 501-504) aktiviert wird, größer ist als eine Verzögerungszeit (td3) zwischen dem Moment, in dem ein OFF-Signal an eine der Antriebsschaltungen (201, 202; 501-504) angelegt wird, und dem Moment, in dem die an die eine der Antriebsschaltungen (201, 202; 501-504) angeschlossene Umschaltvorrichtung (203, 204; 511-514) auf OFF schaltet.

4. Leistungsumrichtersystem nach einem der vorstehenden Ansprüche, wobei
jede der durch die Sendeschaltung (205-208; 541-549) verbundenen Antriebsschaltungen (201, 202; 501-504) ferner eine Beurteilungsschaltung (103, 104) aufweist, die den Betriebsstatus der Umschaltvorrichtungen (203, 204; 511-514) erfasst und deren ON/OFF-Status beurteilt, und
die Steuerschaltung (101, 102; 551-554) eine der Umschaltvorrichtungen (203, 204; 511-514) vom Umschalten auf ON abhält, wenn die Beurteilungsschaltung (103, 104) den ON-Status der anderen Umschaltvorrichtung (204, 203; 511-514) erfasst.

5. Leistungsumrichtersystem nach einem der vorstehenden Ansprüche, wobei die Verzögerungszeit (td2) zwischen dem Moment, in dem ein ON-Signal an die andere Antriebsschaltung (202, 201; 501-504) angelegt wird, und dem Moment, in dem die an die andere Antriebsschaltung (202, 201; 501-504) angeschlossene Umschaltvorrichtung (204, 203; 511-514) startet, mindestens 2 Mikrosekunden beträgt.

6. Leistungsumrichtersystem nach Anspruch 1, mit
ersten und zweiten Gleichspannungsquellen (505, 506), die miteinander in Serie verbunden sind,
unter den Spannungsanschlüssen zwei Anschlüssen an beiden Enden der verbundenen Spannungsquellen und einem Zwischenanschluss an der Verbindung der Spannungsquellen,
wenigstens vier Umschaltschaltungen pro Phase, von denen jede aus einer Umschaltvorrichtung der Umschaltvorrichtungen (511-514) und einer Gleichrichtervorrichtung der Gleichrichtervorrichtungen besteht, die umgekehrt parallel an die Umschaltvorrichtung (511-514) angeschlossen ist,
ersten und zweiten in Serie verbundenen Umschaltschaltungen (511, 521; 514, 524), unter denen eine erste Schaltung die erste und die zweite Umschaltschaltung an beide Endanschlüsse der in Serie verbundenen Gleichspannungsquellen (505, 506) anschließt und die Verbindung der ersten und der zweiten Umschaltschaltung (511, 514) als einen der Wechselspannungsanschlüsse verwendet, der einen Wechselspannungs-Ausgabeanschluss (508) darstellt,
dritten und vierten umgekehrt seriell verbundenen Umschaltschaltungen (512, 522; 513, 523),
einer zweiten Schaltung, die die dritte und die vierte Umschaltschaltung an den Zwischenanschluss der Leistungsquellen des Wechselspannungs-Ausgabeanschlusses (508) anschließt,
wobei jede der Antriebsschaltungen (501-504) in durch die Sendeschaltung (541-550) verbundenen Paaren mit einer Steuerschaltung (551-554) ausgerüstet ist, die eine der Umschaltvorrichtungen (511-514) daran hindert, auf ON zu schalten, wenn eine Beurteilungsschaltung (103, 104) den ON-Status der anderen Umschaltvorrichtung (511-514) erfasst.

7. Leistungsumrichtersystem nach Anspruch 1, mit
ersten und zweiten Gleichspannungsquellen, die miteinander in Serie verbunden sind,
unter den Spannungsanschlüssen zwei Anschlüssen an beiden Enden der verbundenen ersten und zweiten Gleichspannungsquellen und einem Zwischenanschluss an der Verbindung der Spannungsquellen,
wenigstens vier Umschaltschaltungen pro Phase, von denen jede aus einer Umschaltvorrichtung der Umschaltvorrichtungen (511-514) und einer Gleichrichtervorrichtung der Gleichrichtervorrichtungen besteht, die umgekehrt parallel an die Umschaltvorrichtung angeschlossen ist,
ersten und zweiten in Serie verbundenen Umschaltschaltungen, unter denen eine erste Schaltung die erste und die zweite Umschaltschaltung an beide Endanschlüsse der in Serie verbundenen ersten und zweiten Gleichspannungsquellen anschließt und die Verbindung der ersten und der zweiten Umschaltvorrichtung (511, 514) als den Wechselspannungsausgabeanschluss (508) verwendet,
dritten und vierten umgekehrt in Serie verbundenen Umschaltschaltungen, einer zweiten Umschaltschaltung, die die dritte und die vierte Umschaltschaltung an den Zwischenanschluss der ersten und der zweiten Spannungsquelle und den Wechselspannungsausgabeanschluss (508) anschließt,
ersten Sendeleitungen (544, 547) der Sendeschaltung (541-549), um unter den Antriebsschaltungen (501-504) eine erste Antriebsschaltung (501) in der ersten Umschaltschaltung an die dritte Umschaltvorrichtung (513) anzuschließen,
zweiten Sendeleitungen (545, 546, 548) der Sendeschaltung (541-549), um unter den Antriebsschaltungen (501-504) eine zweite Antriebsschaltung (502) in der zweiten Umschaltschaltung an die Umschaltvorrichtung (514) in der vierten Umschaltschaltung anzuschließen, und
dritten Sendeleitungen der Sendeschaltung (541-549), um die zweite Antriebsschaltung (502) an die Umschaltvorrichtung (513) in der dritten Umschaltschaltung anzuschließen,
wobei
die erste Antriebsschaltung (501) eine Steuerschaltung (551) enthält, die den Betrieb unterbricht, wenn ein ON-Signal an die dritte und die vierte Antriebsschaltung (503, 504) unter den Antriebsschaltungen (501-504) eingegeben wird,
die vierte Antriebsschaltung (504) eine Steuerschaltung (554) enthält, die den Betrieb unterbricht, wenn ein ON-Signal an die erste und die zweite Antriebsschaltung (501, 502) eingegeben wird,
die Verzögerungszeit (td1) zwischen dem Moment, in dem ein ON-Signal an die dritte Antriebsschaltung (503) angelegt wird, und dem Moment, in dem die erste Antriebsschaltung (501) deaktiviert wird, kürzer ist als die Verzögerungszeit (td2) zwischen dem Moment, in dem ein ON-Signal an die erste Antriebsschaltung (501) angelegt wird, und dem Moment, in dem die an die erste Antriebsschaltung (501) angeschlossene Umschaltvorrichtung (511) startet, und
die Verzögerungszeit (td1) zwischen dem Moment, in dem ein ON-Signal an die zweite Antriebsschaltung (502) angelegt wird, und dem Moment, in dem die vierte Antriebsschaltung (504) deaktiviert wird, kürzer ist als die Verzögerungszeit (td2) zwischen dem Moment, in dem ein ON-Signal an die vierte Antriebsschaltung (504) angelegt wird, und dem Moment, in dem die an die vierte Antriebsschaltung (504) angeschlossene Umschaltvorrichtung (514) startet.

8. System nach Anspruch 1 oder 3, wobei der Signalgenerator (200; 500) und die Antriebsschaltungen (201, 202; 501-504) untereinander durch optische Fasern verbunden sind, um Antriebssignale optisch zu übertragen.

9. Fahrzeugsystem mit
einer Leistungsversorgung,
einem Motor (703),
dem Leistungsumrichtersystem nach Anspruch 1, das Leistung aus der Leistungsversorgung empfängt und diese umrichtet, um den Motor (703) anzutreiben, und
einem Steuerabschnitt zum Steuern des Leistungsumrichtersystems.

## Revendications

1. Système convertisseur de courant comprenant
une pluralité de bornes de tension de CC,
des bornes de tension de CA,
des dispositifs (203, 204 ; 511-514) de commutation pour connecter lesdites bornes de tension de CC et de CA,
des dispositifs redresseurs qui sont connectés en antiparallèle auxdits dispositifs (203, 204 ; 511-514) de commutation,
un générateur (200 ; 500) de signaux pour générer des signaux pour piloter les dispositifs (203, 204 ; 511-514) de commutation,
des circuits (201, 202; 501-504) de pilotage pour piloter lesdits dispositifs (203, 204 ; 511-514) de commutation en réponse à des signaux de pilotage provenant dudit générateur (200 ; 500) de signaux, et
un circuit (205-208 ; 541-549) de transmission pour interconnecter lesdits circuits (201, 202 ; 501-504) de pilotage pour transmettre leur statut opérationnel,
dans lequel
chacun des circuits (201, 202 ; 501-504) de pilotage connectés ensemble par ledit circuit (205-208 ; 541-549) de transmission a un circuit (101, 102 ; 551-554) de commande qui empêche le fonctionnement d'un des circuits (201, 202 ; 501-504) de pilotage lorsque l'autre circuit (201, 202) de pilotage reçoit un signal d'activation, **caractérisé en ce que**
un délai d'attente (td1) entre l'instant auquel un signal d'activation est appliqué à un des circuits (201, 202 ; 501-504) de pilotage et l'instant auquel le fonctionnement de l'autre circuit (201, 202 ; 501-504) de pilotage est désactivé est plus court qu'un délai d'attente (td2) entre l'instant auquel un signal d'activation est appliqué à l'autre circuit (201, 202 ; 501-504) de pilotage et l'instant auquel le dispositif (203, 204 ; 511-514) de commutation connecté à l'autre circuit (201, 202; 501-504) de pilotage démarre.

2. Système convertisseur de courant selon la revendication 1, dans lequel le délai d'attente (td1) entre l'instant auquel un signal d'activation est appliqué à un des circuits (201, 202; 501-504) de pilotage et l'instant auquel le fonctionnement de l'autre circuit (201, 202 ; 501-504) de pilotage est désactivé est plus court qu'un délai d'attente (td4) entre l'instant auquel un signal de désactivation est appliqué à un des circuits (201, 202 ; 501-504) de pilotage et l'instant auquel l'autre circuit (201, 202 ; 501-504) de pilotage est activé.

3. Système convertisseur de courant selon la revendication 1, dans lequel le délai d'attente (td4) entre l'instant auquel un signal de désactivation est appliqué à un des circuits (201, 202 ; 501-504) de pilotage et l'instant auquel l'autre circuit (201, 202 ; 501-504) de pilotage est activé est supérieur à un délai d'attente (td3) entre l'instant auquel un signal de désactivation est appliqué à un des circuits (201, 202 ; 501-504) de pilotage et l'instant auquel le dispositif (203, 204; 511-514) de commutation connecté à l'un des circuits (201, 202 ; 501-504) de pilotage est désactivé.

4. Système convertisseur de courant selon une quelconque revendication précédente, dans lequel
chacun des circuits (201, 202 ; 501-504) de pilotage connectés ensemble par ledit circuit (205-208 ; 541-549) de transmission comprend en outre un circuit (103-104) de jugement qui détecte le statut opérationnel desdits dispositifs (203, 204 ; 511-514) de commutation et juge l'état d'activation/désactivation de ceux-ci, et
ledit circuit (101, 102 ; 551-554) de commande empêche un des dispositifs (203, 204; 511-514) de commutation d'être activé lorsque le circuit (103-104) de jugement détecte le statut activé de l'autre dispositif (203, 204; 511-514) de commutation.

5. Système convertisseur de courant selon une quelconque revendication précédente, dans lequel le délai d'attente (td2) entre l'instant auquel un signal d'activation est appliqué à l'autre circuit (201, 202 ; 501-504) de pilotage et l'instant auquel le dispositif (203, 204 ; 511-514) de commutation connecté à l'autre circuit (201, 202 ; 501-504) de pilotage démarre est 2 microsecondes ou plus.

6. Système convertisseur de courant selon la revendication 1, comprenant
des première et deuxième sources (505, 506) de tension de CC qui sont connectées en série,
parmi lesdites bornes de tension, deux bornes aux deux extrémités des sources de tension connectées et une borne intermédiaire à la jonction des sources de tension,
au moins quatre circuits de commutation par phase, chacun desquels consistant en un dispositif de commutation desdits dispositifs (511-514) de commutation et un dispositif redresseur desdits dispositifs redresseurs qui est connecté en antiparallèle au dispositif (511-514) de commutation,
des premier et deuxième circuits (511, 521 ; 514, 524) de commutation connectés en série parmi ceux-ci, un premier circuit qui connecte lesdits premier et deuxième circuits de commutation aux deux bornes d'extrémité des sources (505, 506) de courant de CC connectées en série et utilise la jonction des premier et deuxième dispositifs (511-514) de commutation comme une des bornes de tension de CA qui constitue une borne (508) de sortie de CA,
des troisième et quatrième circuits (512, 522 ; 513, 523) de commutation connectés en série inverse,
un deuxième circuit qui connecte lesdits troisième et quatrième circuits de commutation à la borne intermédiaire des sources de courant et à ladite borne (508) de sortie de CA,
dans lequel chacun des circuits (501-504) de pilotage en paires qui sont connectés par ledit circuit (541-550) de transmission est équipé avec un circuit (551-554) de commande qui empêche un des dispositifs (511-514) de commutation d'être activé lorsqu'un circuit (103-104) de jugement détecte le statut activé de l'autre dispositif (511-514) de commutation.

7. Système convertisseur de courant selon la revendication 1, comprenant
des première et deuxième sources de tension de CC qui sont connectées en série,
parmi lesdites bornes de tension, deux bornes aux deux extrémités des première et deuxième sources de tension de CC connectées et une borne intermédiaire à la jonction des sources de tension,
au moins quatre circuits de commutation par phase, chacun desquels consistant en un dispositif de commutation desdits dispositifs (511-514) de commutation et un dispositif redresseur desdits dispositifs redresseurs qui est connecté en antiparallèle au dispositif de commutation,
des premier et deuxième circuits de commutation connectés en série parmi ceux-ci, un premier circuit qui connecte lesdits premier et deuxième circuits de commutation aux deux bornes d'extrémité des première et deuxième sources de tension de CC connectées en série et utilise la jonction des premier et deuxième dispositifs (511-514) de commutation comme la borne (508) de sortie de CA,
des troisième et quatrième circuits de commutation connectés en série inverse,
un deuxième circuit de commutation qui connecte lesdits troisième et quatrième circuits de commutation à la borne intermédiaire des première et deuxième sources de tension et à ladite borne (508) de sortie de CA,
des premières lignes (544, 547) de transmission dudit circuit (541-549) de transmission pour connecter, parmi lesdits circuits (501-504) de pilotage, un premier circuit (501) de pilotage dans ledit premier circuit de commutation au troisième dispositif (513) de commutation,
des deuxièmes lignes (545, 546, 548) de transmission dudit circuit (541-549) de transmission pour connecter, parmi lesdits circuits (501-504) de pilotage, un deuxième circuit (502) de pilotage dans ledit deuxième circuit de commutation au dispositif (514) de commutation dans ledit quatrième circuit de commutation, et
des troisièmes lignes de transmission dudit circuit (541-549) de transmission pour connecter le deuxième circuit (502) de pilotage au dispositif (513) de commutation dans ledit troisième circuit de commutation,
dans lequel
ledit premier circuit (501) de pilotage contient un circuit (551) de commande qui empêche le fonctionnement lorsqu'un signal d'activation est entré dans les troisième et quatrième circuits (503, 504) de pilotage parmi lesdits circuits (501-504) de pilotage,
ledit quatrième circuit (504) de pilotage contient un circuit (554) de commande qui empêche le fonctionnement lorsqu'un signal d'activation est entré dans les premier et deuxième circuits (501, 502) de pilotage,
le délai d'attente (td1) entre l'instant auquel un signal d'activation est appliqué au troisième circuit (503) de pilotage et l'instant auquel le premier circuit (501) de pilotage est désactivé en fonctionnement est plus court que le délai d'attente (td2) entre l'instant auquel un signal d'activation est appliqué au premier circuit (501) de pilotage et l'instant auquel le dispositif (511) de commutation connecté au premier circuit (501) de pilotage démarre, et
le délai d'attente (td1) entre l'instant auquel un signal d'activation est appliqué au deuxième circuit (502) de pilotage et l'instant auquel le quatrième circuit (504) de pilotage est désactivé en fonctionnement est plus court que le délai d'attente (td2) entre l'instant auquel un signal d'activation est appliqué au quatrième circuit (504) de pilotage et l'instant auquel le dispositif (514) de commutation connecté au quatrième circuit (504) de pilotage démarre.

8. Système selon la revendication 1 ou 3, dans lequel ledit générateur (200 ; 500) de signaux et lesdits circuits (201, 202; 501-504) de pilotage sont interconnectés avec des fibres optiques pour transférer optiquement des signaux de pilotage.

9. Système pour véhicule comprenant
une alimentation en courant,
un moteur (703),
le système convertisseur de courant selon la revendication 1 qui reçoit le courant de l'alimentation en courant et convertit celui-ci pour entraîner le moteur (703), et
une section de commande pour commander ledit système convertisseur de courant.
